# EUROPEAN PATENT APPLICATION

(11) **EP 3 037 648 A2**
(43) Date of publication of application: **29.06.2016**
(21) Application number: 15197743.6
(22) Date of filing: 03.12.2015
(51) Int. Cl.: F02M 31/20

(54) **FUEL COOLING APPARATUS**

(30) Priority: 05.12.2014 US 201414562013
(71) Applicant: FUJIKURA LTD., Koto-ku Tokyo 135-8512 (JP)
(72) Inventor: SAITO, Yuji, Tokyo, 135-8512 (JP); TAKAHASHI, Makoto, Tokyo, 135-8512 (JP); WU, Xiao Ping, Raleigh, NC, 27613 (US)
(74) Representative: Karl, Christof

(57) **Abstract**

A fuel cooling apparatus (100) includes a fuel cooling pipe (110) having an inner circumferential surface and a hermetically sealed space formed therein and a heat pipe (120) allowing a working medium to flow therein. The heat pipe includes an evaporation region (122)inserted into the hermetically sealed space of the fuel cooling pipe so that a fuel passage (150) is formed between the evaporation region and the inner circumferential surface of the fuel cooling pipe. The evaporation region evaporates the working medium by heat exchange with a fuel flowing through the fuel passage. The heat pipe also includes a condensation region (124) for condensing the working medium evaporated at the evaporation region and an adiabatic region (126) adiabatically connecting the evaporation region and the condensation region to each other.

## Description

### Technical Field

The present invention relates to a fuel cooling apparatus, and more particularly to a fuel cooling apparatus for cooling a fuel used for a diesel engine.

### Background Art

In a diesel engine, a fuel should be injected into a combustion chamber under a high pressure. Therefore, the pressure of a fuel discharged from a pump should be set to be higher than that in a case of a gasoline engine. Accordingly, a diesel engine employs a high-pressure pump capable of increasing the pressure of a fuel and holding the fuel under a high pressure. When such a high-pressure pump is operated at a high speed, the temperature of the high-pressure pump increases. Thus, the fuel that returns to a fuel tank from a combustion chamber of an engine through a fuel return pipe may also be increased in temperature. The increased temperature of the fuel supplied to the engine causes a lowered density of the fuel, which reduces an output of the engine and lowers the fuel efficiency of the engine.

For example, there has been proposed to provide fins at a portion of a fuel return pipe that is located near a fuel tank for cooling a fuel. See, e.g., JP-A H10-274109. However, air generally stagnates near a fuel tank. Accordingly, the cooling efficiency with those fins is so low that the fuel is not satisfactorily cooled with this technique. Furthermore, this technique can cool a fuel flowing through a fuel return pipe but cannot efficiently cool a fuel flowing through a fuel supply pipe, which extends from a high-pressure pump to an engine.

For example, another method of cooling a fuel flowing through a fuel supply pipe and a fuel return pipe has been proposed in JP-A 2011-127491. Specifically, a fuel supply pipe and a fuel return pipe are extended to form a heat radiation part, which is exposed between the rearward of an engine cover and an engine hood. Wind generated at the time when a vehicle travels is directed to the exposed heat radiation part to cool a fuel flowing through the fuel supply pipe and the fuel return pipe. However, if an external force is applied to the exposed heat radiation part upon collision of a vehicle or the like, the fuel supply pipe or the fuel return pipe may be broken. In such a case, a fuel flowing inside of the fuel supply pipe or the fuel return pipe may leak out, resulting in a serial accident.

Furthermore, U.S. Patent Publication 2013/0186076 discloses using a heat pipe to cool an exhaust manifold but is silent on using a heat pipe to cool a fuel flowing inside of a fuel supply pipe or a fuel return pipe.

### Summary of Invention

The present invention has been made in view of the above drawbacks in the prior art. It is, therefore, an object of the present invention to provide a fuel cooling apparatus capable of cooling a fuel at an optimal location with high cooling efficiency and safety.

According to an aspect of the present invention, there is provided a fuel cooling apparatus capable of cooling a fuel at an optimal location with high cooling efficiency and safety. The fuel cooling apparatus is used for cooling a fuel flowing through a fuel pipe connected to an engine. The fuel cooling apparatus includes a fuel cooling pipe having an inner circumferential surface and a hermetically sealed space formed therein and a heat pipe allowing a working medium to flow therein. The heat pipe includes an evaporation region inserted into the hermetically sealed space of the fuel cooling pipe so that a fuel passage is formed between the evaporation region and the inner circumferential surface of the fuel cooling pipe. The evaporation region is configured to evaporate the working medium by heat exchange with a fuel flowing through the fuel passage. The heat pipe also includes a condensation region configured to condense the working medium evaporated at the evaporation region and an adiabatic region adiabatically connecting the evaporation region and the condensation region to each other. The condensation region is arranged outside of the fuel cooling pipe. The fuel cooling apparatus also has a fuel inlet port configured to introduce the fuel into the fuel passage of the fuel cooling pipe from the fuel pipe and a fuel outlet port configured to return the fuel that has flowed through the fuel passage in the fuel cooling pipe to the fuel pipe.

The evaporation region of the heat pipe may have an outer circumferential surface and a ridge portion projecting from the outer circumferential surface toward the inner circumferential surface of the fuel cooling pipe. The ridge portion serves to guide the fuel flowing in the fuel passage. In this case, the ridge portion may be formed in a spiral manner along an axial direction of the evaporation region of the heat pipe.

Alternatively, the fuel cooling pipe may have a ridge portion projecting from the inner circumferential surface thereof toward the evaporation region of the heat pipe. The ridge portion serves to guide the fuel flowing in the fuel passage. In this case, the ridge portion may be formed in a spiral manner along an axial direction of the fuel cooling pipe.

Moreover, the condensation region may have a plurality of fins. The fuel inlet port and the fuel outlet port may be connected to a fuel supply pipe that supplies the fuel to the engine. Alternatively, the fuel inlet port and the fuel outlet port may be connected to a fuel return pipe that returns the fuel to a fuel tank from the engine.

The above and other objects, features, and advantages of the present invention will be apparent from the following description when taken in conjunction with the accompanying drawings which illustrate preferred embodiments of the present invention by way of example.

### Brief Description of the Drawings

FIG. 1 is a diagram schematically showing a fuel cooling apparatus according to a first embodiment of the present invention and a diesel engine using the fuel cooling apparatus.
FIG. 2 is a perspective view showing the fuel cooling apparatus shown in FIG. 1.
FIG. 3 is a diagram schematically illustrating the fuel cooling apparatus shown in FIG. 1, with cross-sections of a fuel cooling pipe, a fuel inlet port, and a fuel outlet port of the fuel cooling apparatus.
FIG. 4 is a schematic cross-sectional view explanatory of an operation of a heat pipe of the fuel cooling apparatus shown in FIG. 3.
FIG. 5 is a perspective view showing a portion of the heat pipe of the fuel cooling apparatus shown in FIG. 3.
FIG. 6 is a diagram schematically illustrating a fuel cooling apparatus according to a second embodiment of the present invention, with cross-sections of a fuel cooling pipe, a fuel inlet port, and a fuel outlet port of the fuel cooling apparatus.

### Description of Embodiments

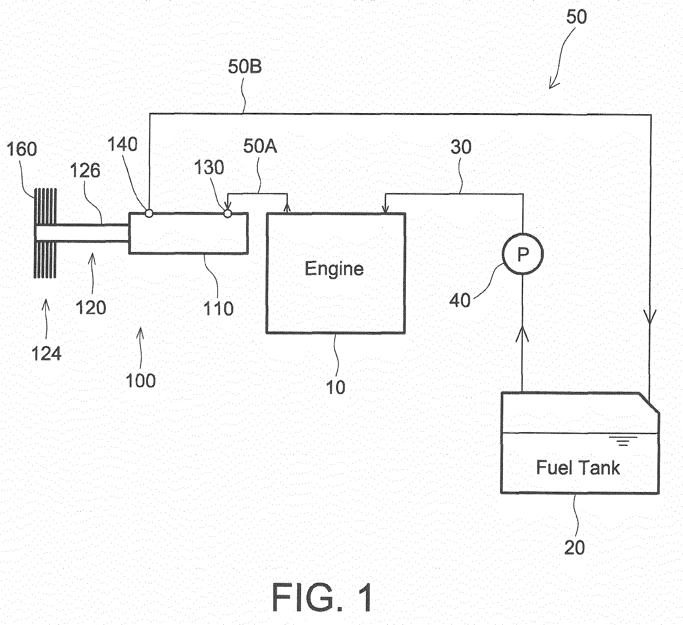

Embodiments of a fuel cooling apparatus according to the present invention will be described in detail with reference to FIGS. 1 to 6. In FIGS. 1 to 6, the same components and corresponding components are denoted by the same reference numerals, and the repetitive explanation thereof will be omitted herein.

FIG. 1 is a diagram schematically showing a fuel cooling apparatus 100 according to a first embodiment of the present invention and a diesel engine 10 using the fuel cooling apparatus 100. As shown in FIG. 1, a fuel supply pipe 30 for supplying a fuel from a fuel tank 20 is connected to the diesel engine 10. A high-pressure pump 40 is provided in the middle of the fuel supply pipe 30. Thus, a fuel in the fuel tank 20 is supplied to the engine 10 by the high-pressure pump 40. Furthermore, a fuel return pipe 50 for returning an excess fuel to the fuel tank 20 is connected to the diesel engine 10. An excess fuel that has not been combusted in a combustion chamber of the engine 10 is returned to the fuel tank 20 through the fuel return pipe 50.

The fuel cooling apparatus 100 according to the present embodiment is provided in the middle of the fuel return pipe 50. Although the fuel cooling apparatus 100 is provided on the fuel return pipe 50 in this embodiment, the present invention is not limited to this example. For example, the fuel cooling apparatus 100 may be provided in the middle of the fuel supply pipe 30.

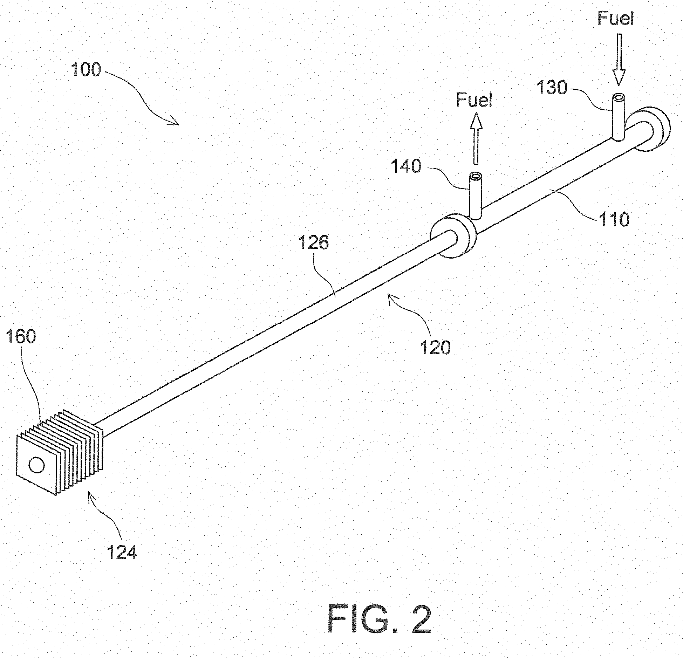

FIG. 2 is a perspective view showing the fuel cooling apparatus 100. As shown in FIG. 2, the fuel cooling apparatus 100 includes a fuel cooling pipe 110 having a hermitically sealed space therein and a heat pipe 120 having a first end inserted into the fuel cooling pipe 110. The fuel cooling apparatus 100 also includes a fuel inlet port 130 and a fuel outlet port 140 provided near opposite ends of the fuel cooling pipe 110. The fuel inlet port 130 is connected to the aforementioned fuel return pipe 50A extending from the engine 10 (see FIG. 1). The fuel outlet port 140 is connected to the fuel return pipe 50B connected to the fuel tank 20 (see FIG. 1).

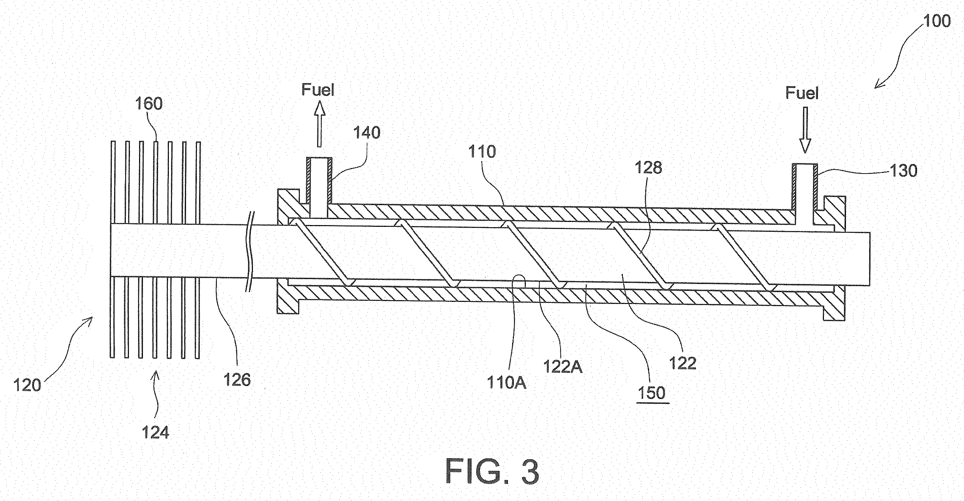

FIG. 3 schematically illustrates the fuel cooling apparatus 100. In FIG. 3, only the fuel cooling pipe 110, the fuel inlet port 130, and the fuel outlet port 140 are shown in cross-section. As shown in FIG. 3, the first end of the heat pipe 120 is inserted into the hermetically sealed space in the fuel cooling pipe 110. Working medium (not shown) flows inside of the heat pipe 120. The heat pipe 120 includes an evaporation region 122 operable to evaporate the working medium flowing inside of the heat pipe 120, a condensation region 124 operable to condense the working medium, and an adiabatic region 126 adiabatically connecting the evaporation region 122 and the condensation region 124 to each other.

The evaporation region 122 of the heat pipe 120 is formed by a portion of the heat pipe 120 that is inserted into the hermetically sealed space of the fuel cooling pipe 110. As shown in FIG. 3, a fuel passage 150 is formed between an outer circumferential surface 122A of the evaporation region 122 of the heat pipe 120 and an inner circumferential surface 110A of the fuel cooling pipe 110. This fuel passage 150 communicates with the fuel return pipe 50A connected to the fuel inlet port 130 and the fuel return pipe 50B connected to the fuel outlet port 140. Thus, a fuel is introduced into the fuel passage 150 from the fuel return pipe 50A through the fuel inlet port 130, delivered through the fuel passage 150 in an axial direction of the fuel cooling pipe 110, and then returned to the fuel return pipe 50B through the fuel outlet port 140.

When a high-temperature fuel flowing through the fuel passage 150 in the fuel cooling pipe 110 is brought into contact with the outer circumferential surface 122A of the evaporation region 122 of the heat pipe 120, then heat is exchanged between the high-temperature fuel and the working liquid flowing within the evaporation region 122. As a result, the working liquid flowing within the evaporation region 122 absorbs heat of the fuel and evaporates in the evaporation region 122. In this manner, the fuel flowing through the fuel passage 150 is cooled.

As shown in FIG. 2, the condensation region 124 of the heat pipe 120 is located outside of the fuel cooling pipe 110 and provided on a second end of the heat pipe 120, which is an opposite side to the evaporation region 122. In the present embodiment, the condensation region 124 has a number of fins 160.

The working vapor generated in the evaporation region 122 of the heat pipe 120 moves as latent heat through the adiabatic region 126 to the condensation region 124, where the working vapor is condensed into a working liquid by dissipation of heat from the fins 160. Thus, the fuel flowing through the fuel passage 150 can be cooled by transferring heat from the evaporation region 122 to the condensation region 124 of the heat pipe 120.

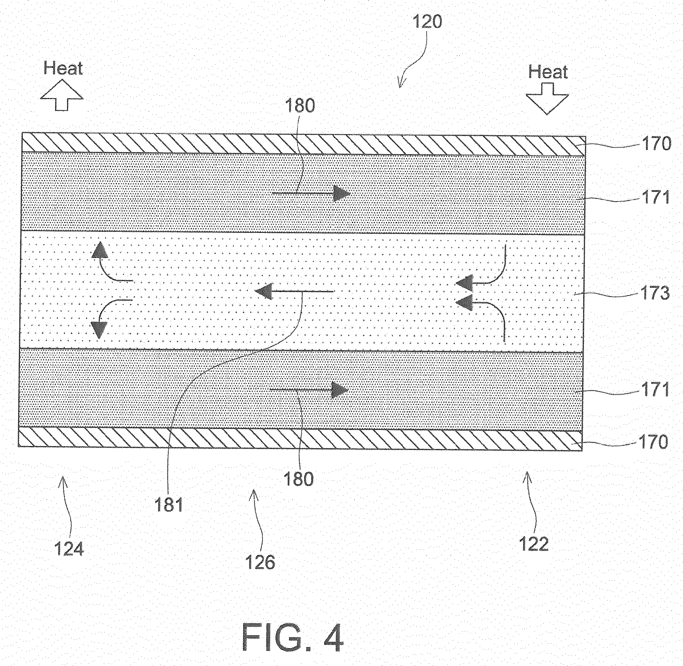

FIG. 4 is a schematic cross-sectional view explanatory of an operation of the heat pipe 120. As shown in FIG. 4, the heat pipe 120 includes a shell 170, in which a wicking layer 171 and a vapor space 173 are formed. As shown in FIG. 4, the wicking layer 171 is formed inside of the shell 170, and the vapor space 173 is formed inside of the wicking layer 171.

For example, the shell 170 is made of a material having a high thermal conductivity, such as copper. Accordingly, thermal energy can effectively be absorbed into the working medium at the evaporation region 122. Furthermore, thermal energy can effectively be released from the working medium at the condensation region 124. In other words, the thermal energy of a high-temperature fuel flowing outside of the shell 170 can effectively be absorbed into the evaporation region 122, and the absorbed thermal energy can effectively be released from the condensation region 124.

The adiabatic region 126 is located between the evaporation region 122 and the condensation region 124. The amount of heat transfer is substantially zero at the adiabatic region 126. In other words, the adiabatic region 126 does not absorb any thermal energy from surrounding regions or release any thermal energy into surrounding regions.

The wicking layer 171 is formed of a porous material. For example, the wicking layer 171 is formed of sintered copper particles. Capillary forces produced in such a porous material generate circulating forces of the working liquid within the heat pipe 120. Those circulating forces cause the working liquid to flow from the condensation region 124 to the evaporation region 122, i.e., from a low-temperature side to a high-temperature side in a direction indicated by the arrows 180. Heat received by the evaporation region 122 moves through heat conduction within the shell 170, the wicking layer 171, and a portion of the working liquid in the wicking layer 171. The working liquid evaporates at an interface between the working liquid and the vapor space 173, where the working vapor flows from the evaporation region 122 to the condensation region 124, i.e., from a high-temperature side to a low-temperature side in a direction indicated by the arrow 181.

In this manner, the thermal energy of a high-temperature fuel flowing through the fuel passage 150 in the fuel cooling pipe 110 is absorbed into the evaporation region 122 and released from the condensation region 124 by the working medium that changes its phase within the heat pipe 120. The fuel flowing through the fuel passage 150 is thus cooled.

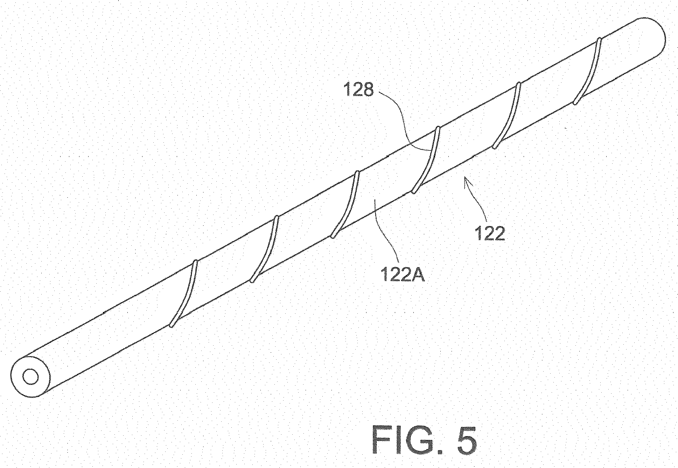

FIG. 5 is a perspective view showing the evaporation region 122 of the heat pipe 120, which is to be inserted into the hermetically sealed space of the fuel cooling pipe 110. As shown in FIGS. 3 and 5, the evaporation region 122 of the heat pipe 120 has a ridge portion 128 projecting from the outer circumferential surface 122A toward the inner circumferential surface 110A of the fuel cooling pipe 110. In the present embodiment, the ridge portion 128 is formed in a spiral manner along an axial direction of the evaporation region 122.

With the ridge portion 128 thus formed, the fuel is guided by the ridge portion 128 when it flows through the fuel passage 150 in the fuel cooling pipe 110. Therefore, a heating surface area is increased between the fuel and the evaporation region 122 of the heat pipe 120. Thus, the fuel can efficiently be cooled. It is preferable to bring the ridge portion 128 into contact with the inner circumferential surface 110A of the fuel cooling pipe 110. Nevertheless, the ridge portion 128 may not necessarily be brought into contact with the inner circumferential surface 110A of the fuel cooling pipe 110 as long as the fuel can be guided by the ridge portion 128.

For example, the fuel cooling pipe 110 may have an axial length of 300 mm and a thickness of 1.2 mm. The diameter of the inner circumferential surface 110A of the fuel cooling pipe 110 may be 15.7 mm. The diameter of the outer circumferential surface 122A of the evaporation region 122 of the heat pipe 120 may be 15 mm. The ridge portion 128 may have a height of 0.35 mm.

According to the present embodiment, a fuel is supplied to the fuel passage 150 in the fuel cooling pipe 110. Heat is exchanged between the fuel and the evaporation region 122 of the heat pipe 120. Therefore, the fuel can be cooled. Particularly, the fuel flowing in the fuel return pipe 50 or the fuel supply pipe 30 can be cooled merely by connecting the fuel inlet port 130 and the fuel outlet port 140 to the fuel return pipe 50 or the fuel supply pipe 30. For example, if the fuel inlet port 130 and the fuel outlet port 140 are connected to the fuel return pipe 50 or the fuel supply pipe 30 near the engine 10, then a fuel flowing in the fuel pipe can be cooled within an engine room.

As described above, the working medium evaporated within the evaporation region 122 by heat exchange with the fuel flowing through the fuel passage 150 is condensed in the condensation region 124, which is located outside of the fuel cooling pipe 110. The condensation region 124 can be located at any position independent of the evaporation region 122. Therefore, the condensation region 124 can be installed at a location having a high heat dissipation efficiency. Thus, the capability of cooling the fuel can be enhanced.

Furthermore, if the fuel return pipe 50 or the fuel supply pipe 30 is extended, the possibility of breakage upon application of external forces caused by collision of a vehicle or the like is increased. In contrast, according to the present embodiment, the fuel return pipe 50 and the fuel supply pipe 30 do not need to be extended, and the fuel inlet port 130 and the fuel outlet port 140 can be connected directly to the existing fuel return pipe 50 or fuel supply pipe 30. Accordingly, the possibility that the fuel return pipe 50 or the fuel supply pipe 30 is broken by collision of a vehicle or the like can be minimized. Thus, safety of the engine can be improved.

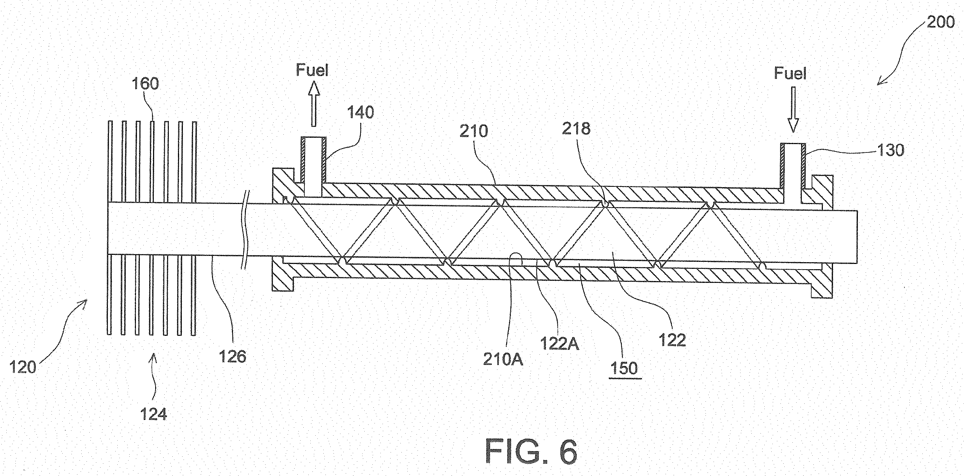

FIG. 6 schematically illustrates a fuel cooling apparatus 200 according to a second embodiment of the present invention. In FIG. 6, only a fuel cooling pipe 210, a fuel inlet port 130, and a fuel outlet port 140 are shown in cross-section as with FIG. 3. In the aforementioned first embodiment, the ridge portion 128 is formed on the outer circumferential surface 122A of the evaporation region 122 of the heat pipe 120. In the second embodiment, a ridge portion 218 is formed on an inner circumferential surface 210A of the fuel cooling pipe 210 so as to project from the inner circumferential surface 210A of the fuel cooling pipe 210 toward the outer circumferential surface 122A of the evaporation region 122 of the heat pipe 120. In the present embodiment, the ridge portion 218 is formed in a spiral manner along an axial direction of the fuel cooling pipe 210.

With the ridge portion 218 thus formed, the fuel is guided by the ridge portion 218 when it flows through the fuel passage 150 in the fuel cooling pipe 110. Therefore, a heating surface area is increased between the fuel and the evaporation region 122 of the heat pipe 120. Thus, the fuel can efficiently be cooled. It is preferable to bring the ridge portion 218 into contact with the outer circumferential surface 122A of the evaporation region 122 of the heat pipe 120. Nevertheless, the ridge portion 218 may not necessarily be brought into contact with the outer circumferential surface 122A of the evaporation region 122 of the heat pipe 120 as long as the fuel can be guided by the ridge portion 218.

Thus, according to the aforementioned embodiments, when a fuel supplied into a fuel passage from a fuel inlet port is brought into contact with an evaporation region of a heat pipe, heat is exchanged between the high-temperature fuel and a working medium flowing within the evaporation region. As a result, the working medium flowing within the evaporation region absorbs heat of the fuel and evaporates in the evaporation region. Accordingly, the fuel flowing through the fuel passage is cooled. A fuel flowing in a fuel pipe can be cooled merely by connecting the fuel inlet port and the fuel outlet port to the fuel pipe. Therefore, the fuel can be cooled at an optimal location of the fuel pipe. Furthermore, the condensation region for condensing the working medium can be located at any position independent of the evaporation region. Therefore, the condensation region can be installed at a location having a high heat dissipation efficiency. Thus, the capability of cooling the fuel can be enhanced. Moreover, and the fuel inlet port and the fuel outlet port can be connected directly to the existing fuel pipe, and the fuel pipe does not need to be extended. Accordingly, the possibility that the fuel pipe is broken by collision of a vehicle or the like can be minimized. Thus, safety of the engine can be improved.

Although certain preferred embodiments of the present invention have been shown and described in detail, it should be understood that various changes and modifications may be made therein without departing from the scope of the appended claims.

## Claims

1. A fuel cooling apparatus for cooling a fuel flowing through a fuel pipe connected to an engine, the fuel cooling apparatus comprising:
a fuel cooling pipe having an inner circumferential surface and a hermetically sealed space formed therein;
a heat pipe allowing a working medium to flow therein, the heat pipe including:
i) an evaporation region inserted into the hermetically sealed space of the fuel cooling pipe so that a fuel passage is formed between the evaporation region and the inner circumferential surface of the fuel cooling pipe, the evaporation region being configured to evaporate the working medium by heat exchange with a fuel flowing through the fuel passage,
ii) a condensation region configured to condense the working medium evaporated at the evaporation region, the condensation region being arranged outside of the fuel cooling pipe, and
iii) an adiabatic region adiabatically connecting the evaporation region and the condensation region to each other;
a fuel inlet port configured to introduce the fuel into the fuel passage of the fuel cooling pipe from the fuel pipe; and
a fuel outlet port configured to return the fuel that has flowed through the fuel passage in the fuel cooling pipe to the fuel pipe.

2. The fuel cooling apparatus as recited in claim 1, wherein the evaporation region of the heat pipe has an outer circumferential surface and a ridge portion projecting from the outer circumferential surface toward the inner circumferential surface of the fuel cooling pipe, and the ridge portion is configured to guide the fuel flowing in the fuel passage.

3. The fuel cooling apparatus as recited in claim 2, wherein the ridge portion is formed in a spiral manner along an axial direction of the evaporation region of the heat pipe.

4. The fuel cooling apparatus as recited in claim 1, wherein the fuel cooling pipe has a ridge portion projecting from the inner circumferential surface thereof toward the evaporation region of the heat pipe, and the ridge portion is configured to guide the fuel flowing in the fuel passage.

5. The fuel cooling apparatus as recited in claim 4, wherein the ridge portion is formed in a spiral manner along an axial direction of the fuel cooling pipe.

6. The fuel cooling apparatus as recited in claim 1, wherein the condensation region has a plurality of fins.
